# EUROPÄISCHE PATENTSCHRIFT

(11) **EP 2 601 023 B1**
(45) Veröffentlichungstag und Bekanntmachung des Hinweises auf die Patenterteilung: **01.10.2014**
(21) Anmeldenummer: 11779560.9
(22) Anmeldetag: 16.06.2011
(51) Int. Cl.: B27M 3/00, E04C 2/12, F16B 12/12

(54) **Bauplatte hergestellt durch verbinden von Teilstücken aus Holz**
Construction plate produced by connecting parts made of woods
plaque de construction fabriquée par liaison de planches en bois

(30) Priorität: 03.08.2010 DE 102010033151
(43) Veröffentlichungstag der Anmeldung: 12.06.2013
(73) Patentinhaber: Junker Holding GmbH, 77787 Nordrach (DE)
(72) Erfinder: JUNKER, Dieter, 77787 Nordrach (DE)
(74) Vertreter: Kern, Gerbert
(86) Internationale Anmeldenummer: PCT/DE2011/001294
(87) Internationale Veröffentlichungsnummer: WO 2012/016556

(56) Entgegenhaltungen:
- WO-A1-2010/020829
- DE-A1- 3 639 143
- DE-A1- 19 941 659
- DE-U1-202010 006 711
- FR-A1- 2 659 703

## Beschreibung

Die Erfindung betrifft eine Bauplatte der Art eines Bretts bestehend in Teilstücken der Art von Riemen (1, 2, 3, 4) aus Holz, die in Reihe nebeneinander angeordnet gemeinsam zwei einander gegenüberliegende Frontseiten der Platte bilden und an geradlinig ausgerichteten Stirnseiten durch ebenso geradlinig ausgerichtete Federleisten (6, 7, 10) einerseits und durch die Federleisten umfassende Nuten (5, 8, 9) andererseits ohne zusätzliche Verbindungsmittel wie Leime oder anderen Klebstoffe miteinander verbunden sind, wobei die Federleisten und Nuten gleichartigen Querschnitt der Art einer Schwalbenschwanz-Form aufweisen,

Eine Bauplatte der genannten Art ist Gegenstand der Veröffentlichung WO 2010/020829A1 vom 25.Februar 2010, hier Dokument (D1) genannt, und gehört als Gegenstand einer Europäischen Patentanmeldung (EP2326774), angemeldet am 20. August 2008, zum Stand der Technik.

Der Erfindung liegt nun zunächst die Aufgabe zugrunde, eine besonders haltbare Verbindung von Riemen aus Holz zur Herstellung einer Bauplatte der genannten Art hauptsächlich aus bewährten Naturprodukten auch ohne den Einsatz von zusätzlich Verbindungsmitteln zu schaffen. Die Lösung dieser Aufgabe ist als Gegenstand einer ersten Deutschen Patentanmeldung DE102010008684 vom 19.Februar 2010 schliesslich mit WO 2012/016556 A2/A9 bekannt gemacht worden.
Sie besteht im Ergebnis einer Bauplatte der anfangs genannten Art, deren Federleisten von den entsprechenden Nuten im Gebrauch unter dauerhaft gleichmässigen Einflüssen bezüglich Temperatur und Feuchtigkeit der Umgebung unter ständiger Vorspannung umfasst sind. Die Verbindung der Riemen längs ihrer Stirnseiten über Federleisten und Nuten mit Querschnitten der Art einer Schwalbenschwanz-Form ist formschlüssig in den zwei Richtungen quer zu den Stirnseiten und so unter Belastung besonders haltbar. Belastungen zwischen miteinander verbundenen Riemen in Richtung längs ihrer benachbarten Stirnseiten werden durch die Reibungskräfte zwischen Nut und darin unter ständiger Vorspannung umschlossener Federleiste aufgefangen.

Der Erfindung liegt nun auch die besondere Aufgabe zugrunde, eine Verschiebung der miteinander verbundenen Riemen gegeneinander in Richtung längs ihrer Stirnseiten unter besonders hoher Belastung zu verhindern, die von den Reibungskräften zwischen Nut und darin umschlossener Federleiste allein nicht mehr aufgefangen werden.

Die erfinderische Lösung der genannten Aufgaben ist im hier vorliegenden Patentanspruch 1 angegeben und besteht bei einer Bauplatte der anfangs genannten Art hauptsächlich darin,
- dass die Federleisten von den Nuten unter gleichmässigen Einflüssen bezüglich Temperatur und Feuchtigkeit der Umgebung unter ständiger Vorspannung umfasst sind,
- dass an jeweils mindestens einer Stelle längs einander benachbarter Stirnseiten der Riemen ein Riegel aus Holz in eine Riegelnut eingesetzt ist, die an einer der gemeinsamen Frontseiten der Riemen offen ist und sich vom einen zum anderen der miteinander verbundenen Riemen erstreckt,
- dass die Riegelnut eine Tiefe aufweist, die von ihrer Öffnung in einer der einander gegenüberliegenden Frontseiten der Riemen aus in die Federleiste der Verbindung der einander benachbarten Riemen eindringt,
- dass die den miteinander verbundenen Riemen gemeinsame Riegelnut die Form eines etwa rotationssymmetrischen Lochs mit Öffnung in mindestens einer der gemeinsamen Frontseiten der Riemen und mit axialer Ausrichtung etwa senkrecht zur gemeinsamen Frontseite aufweist und
- dass der Riegel in einem dem rotationssymmetrischen Loch ähnlichen, etwa achssymmetrischen Zapfen aus Holz besteht, der in das Loch durch die Öffnung in einer der gemeinsamen Frontseiten der Riemen eingetrieben ist.

Der Riegel in Form eines etwa zylindrischen oder leicht konischen Zapfens eingetrieben in eine Riegelnut der Art einer etwa zylindrischen Bohrung hat sich als besonders zweckmässig erwiesen. Besonders vorteilhafte Ausführungsarten der Erfindung sind in den hier beigefügten Patentansprüchen angegeben.

Die Erfindung wird am Ausführungsbeispiel einer vorteilhaften Ausführungsart mittels Zeichnungen näher erläutert. In den Zeichnungen stellen dar:
Figur 1: ein Bauelement aus Holz in Form eines Bretts, zusammengesetzt aus vier Riemen mit Nuten und Federleisten an den geradlinig ausgerichteten Stirnseiten und mit Riegel in Form zylindrischer Zapfen eingetrieben in Riegelnuten in Form zylindrischer Bohrungen an jeweils zwei Stellen gleichmässig verteilt längs einander benachbarter Stirnseiten der Riemen;
Figur 2: einen Querschnitt durch die Verbindung entlang der einander benachbarten Stirnseiten zweier Riemen des Bauelements nach Figur 1 zur Darstellung der in der Nut des einen Riemens eingeschlossenen Federleiste des anderen Riemens und zur Darstellung von Riegelnut und Riegel; und
Figur 3: die Darstellung der ersten drei Riemen des Bauelements nach Figur 1 vor ihrer Verbindung und die für die Verbindung erfindungsgemäss vorgesehenen Bestandteile und Merkmale.

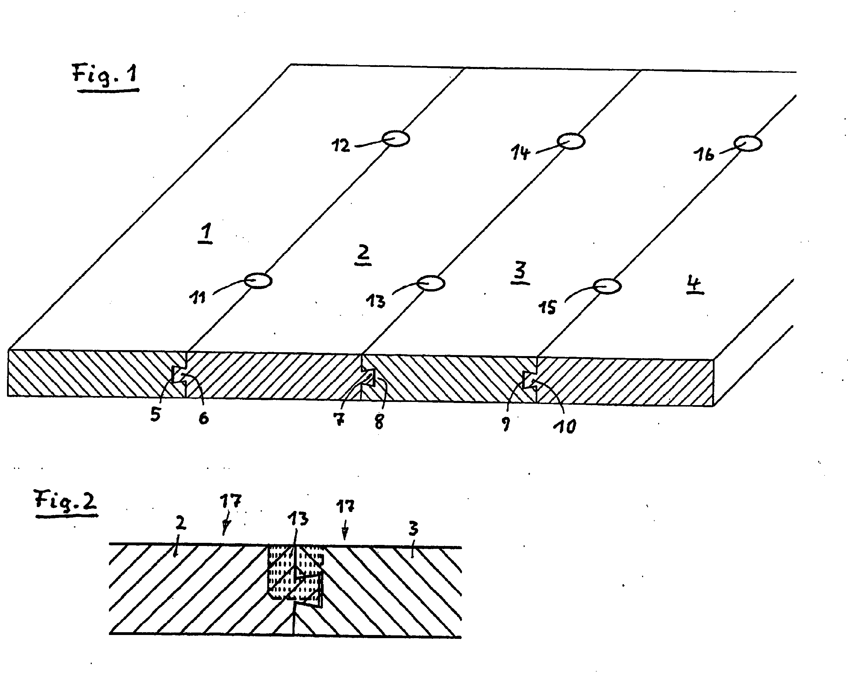

In Figur 1 sind vier nebeneinander in Reihe angeordnete Riemen 1 bis 4 aus Hölzern etwa gleicher innerer Struktur dargestellt. Der äusserste linke Riemen 1 weist an der rechten seiner zwei geradlinig ausgerichteten Stirnseiten eine Nut 5 auf, die einer entsprechenden Federleiste 6 an der einen von zwei geradlinig ausgerichteten Stirnseiten des Riemens 2 zugeordnet ist. An der zweiten geradlinig ausgerichteten Stirnseite des Riemens 2 befindet sich eine zweite Federleiste 7, der eine Nut 8 an der einen von zwei geradlinig ausgerichteten Stirnseiten des Riemens 3 zugeordnet ist. Eine gleiche Zuordnung besteht zwischen einer Nut 9 an der zweiten Stirnseite des Riemens 3 und einer Federleiste 10 an der linken von zwei geradlinig ausgerichteten Stirnseiten des Riemens 4, der die rechte Seite des fertigen Bretts bildet. Die Riemen 1 und 3 weisen als Teilstücke des fertigen Bretts nur Nuten 5, 8 und 9 auf An den Riemen 2 und 4 als Teilstücke des fertigen Bretts befinden sich hingegen nur Federleisten 6, 7 und 10. Die Riemen sind nach einem Verfahren gemäss älterer Patentanmeldung Nr. 10 2010 008 684.3 zusammengesetzt und miteinander verbunden.

Entlang der Verbindung zwischen den Riemen 1 und 2 in Figur 1 befinden sich etwa gleichmässig verteilt zwei Riegel in Form von hauptsächlich zylindrischen Zapfen 11 und 12 aus Holz, die in gleich geformte Bohrungen eingetrieben sind. Die Bohrungen und Zapfen überqueren die einander benachbarten Stirnseiten der Riemen und bilden einen Formschluss gegen Schub- oder Scherkräfte zwischen den Riemen in Richtung längs der einander benachbarten Stirnseiten. Die Bohrungen und der Einsatz der Zapfen 11 und 12 werden vorzugsweise durchgeführt, nachdem die Federleiste 6 des Riemens 2 in die zugeordnete Nut 5 des Riemens 1 beginnend an einem Ende der Stirnseiten eingeführt wurde und so die Riemen 1 und 2 bereits miteinander verbunden sind.

Gleiche Riegel und Riegelnuten in Form von hauptsächlich zylindrischen Zapfen 13 und 14 in zylindrischen Bohrungen befinden sich zwischen den Riemen 2 und 3 und bilden einen Formschluss gegen Schubbelastungen zwischen den so miteinander verbundenen Riemen. Zapfen 15 und 16 eingetrieben in gleich geformte Bohrungen verbinden die Riemen 3 und 4 miteinander.

Die Figur 2 zeigt vergrössert einen Querschnitt durch die Verbindung der Riemen 2 und 3 und darin den Einsatz des Zapfens 13 oder 14. In der Darstellung nach Figur 2 hat die Riegelnut in Form einer zylindrischen Bohrung nur eine Öffnung an der oberen gemeinsamen Frontseite 17 der Riemen. Die Bohrung und der darin eingesetzte Zapfen 13 enden in der Tiefe unterhalb der Federleiste 17 und oberhalb der unteren gemeinsamen Frontseite 18 derart, dass diese keine Unterbrechungen durch Zapfen aufweist.

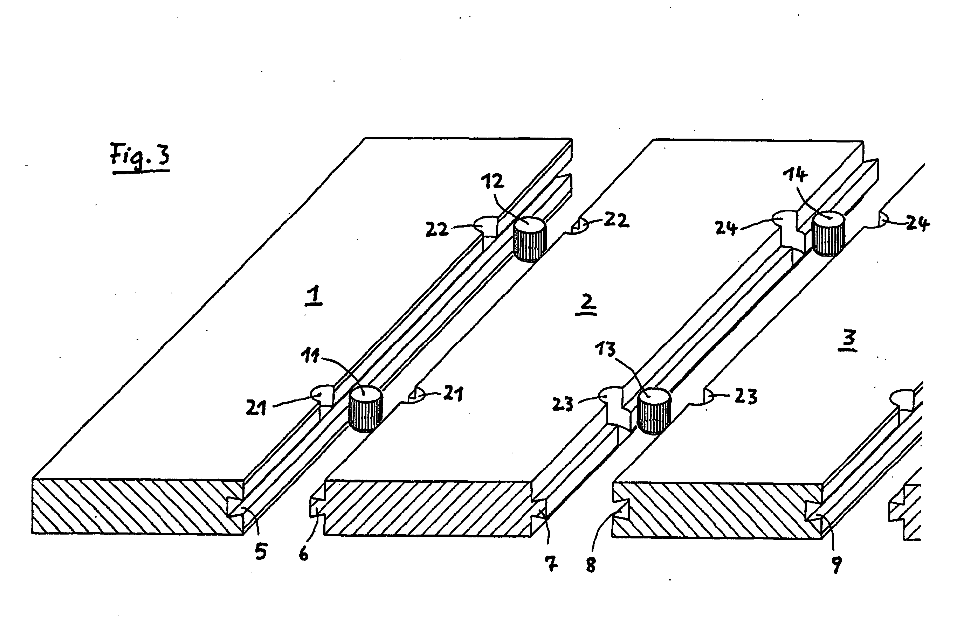

In Figur 3 sind die Riemen 1, 2 und 3 und die dazwischen angeordneten Zapfen 11, 12, 13 Und 14 im Zustand vor ihrer Zusammensetzung dargestellt. Ausserdem lässt die Figur 3 die den Zapfen 11 und 12 zugeordneten Bohrungen in Form von Halbschalen 21 und 22 und die den Zapfen 13 und 14 zugeordneten Bohrungen in Form von Halbschalen 23 und 24 erkennen. Die Bohrungen reichen in die Tiefe bis über die Federleisten 6 und 7. die Zapfen erstrecken sich axial in die Tiefe bis etwa zur Mitte der Riemen in Bezug auf deren Dicke. Die Mantelflächen der Zapfen weisen gemäss der Darstellung in Figur 3 achssymmetrisch ausgerichtete Riefen auf, die sich mit dem Holz der Riemen in den Bohrungen besonders haltbar verbinden können.

## Patentansprüche

1. Bauplatte der Art eines Bretts bestehend in Teilstücken der Art von Riemen (1, 2, 3, 4) aus Holz, die in Reihe nebeneinander angeordnet gemeinsam zwei einander gegenüberliegende Frontseiten der Platte bilden und an geradlinig ausgerichteten Stirnseiten durch ebenso geradlinig ausgerichtete Federleisten (6, 7, 10) einerseits und durch die Federleisten umfassende Nuten (5, 8, 9) andererseits ohne zusätzliche Verbindungsmittel wie Leime oder anderen Klebstoffe miteinander verbunden sind, wobei die Federleisten und Nuten gleichartigen Querschnitt der Art einer Schwalbenschwanz-Form aufweisen,
**dadurch gekennzeichnet,**
- **dass** die Federleisten von den Nuten unter gleichmässigen Einflüssen bezüglich Temperatur und Feuchtigkeit der Umgebung unter ständiger Vorspannung umfasst sind,
- **dass** an jeweils mindestens einer Stelle längs einander benachbarter Stirnseiten der Riemen ein Riegel aus Holz in eine Riegelnut eingesetzt ist, die an einer der gemeinsamen Frontseiten der Riemen offen ist und sich vom einen zum anderen der miteinander verbundenen Riemen erstreckt,
- **dass** die Riegelnut eine Tiefe aufweist, die von ihrer Öffnung in einer der einander gegenüberliegenden Frontseiten der Riemen aus in die Federleiste der Verbindung der einander benachbarten Riemen eindringt,
- **dass** die den miteinander verbundenen Riemen gemeinsame Riegelnut die Form eines etwa rotationssymmetrischen Lochs mit Öffnung in mindestens einer der gemeinsamen Frontseiten der Riemen und mit axialer Ausrichtung etwa senkrecht zur gemeinsamen Frontseite aufweist und
- **dass** der Riegel in einem dem rotationssymmetrischen Loch ähnlichen, etwa achssymmetrischen Zapfen aus Holz (11, 12, 13, 14) besteht, der in das Loch durch die Öffnung in einer der gemeinsamen Frontseiten der Riemen eingetrieben ist.

2. Bauelement nach Patentanspruch 1, **dadurch gekennzeichnet,**
- **dass** die Riegelnut in einer Bohrung mit etwa zylindrische Form und axialer Tiefe besteht, die in die Federleiste der Verbindung der einander benachbarten Riemen eindringt, vorzugsweise diese Federleiste durchdringt,
- und **dass** in die Bohrung der Riegel in einem etwa zylindrischen oder leicht konisch ausgebildeten Zapfen besteht, der vorzugsweise mit achssymmetrisch ausgerichteten Riefen an seiner Mantelfläche ausgebildet ist.

3. Bauelement nach Patentanspruch 1 oder 2, **dadurch gekennzeichnet,**
- **dass** der Zapfen eine axiale Länge etwa gleich der Hälfte der Dicke der Riemen und die Bohrung eine axiale Tiefe grösser als die axiale Länge des Zapfens aufweist.

4. Bauelement nach Patentanspruch 3, **dadurch gekennzeichnet,**
- **dass** die axiale Tiefe der Bohrung die Dicke im Querschnitt der davon betroffenen Federleiste einschliesst.

## Claims

1. A constructional board of the panel of wood type comprising of portions of the strap type (1, 2, 3, 4) made of wood, which are arranged in rows side by side and form together two opposite front sides of the board, and are connected with each other without additional connecting means such as glues or other adhesives on linearly oriented front sides by clip connectors (6, 7, 10) equally oriented linearly on the one hand, and by the grooves (5, 8, 9) including the clip connectors on the other hand, with the clip connectors and grooves comprising an equal cross-section of the dovetail shape type,
**characterised in**
- **that** the clip connectors are encompassed by the grooves under constant pretension and under uniform influences regarding temperature and humidity of the environment,
- **that** in at least one location each alongside adjacent front sides of the straps a latch made of wood is inserted into a locking notch, which is open on one of the common front sides of the straps, and extends from one strap to the other strap of the straps connected with each other,
- **that** the locking notch comprises a depth penetrating from its opening in one of the front sides of the straps opposite to each other into the clip connector of the connection of adjacent straps,
- **that** the locking notch common to the straps connected with each other has the shape of an approximately rotationally symmetric hole with opening in at least one of the common front sides of the straps, and with axial alignment approximately vertical to the common front side, and
- **that** the latch is comprised of an approximately axially symmetric wooden peg (11, 12, 13, 14) similar to the rotationally symmetric hole which peg is driven into the hole through the opening in one of the common front sides of the straps.

2. The constructional element according to claim 1, **characterised in**
- **that** the locking notch is comprised of a bore with approximately cylindrical shape and axial depth which penetrates into the clip connector of the connection of the adjacent straps, preferably penetrates through said clip connector,
- and **that** in the bore the latch is comprised of an approximately cylindrical peg or slightly conically shaped peg which is preferably formed with axially symmetrically aligned striations on its generated surface.

3. The constructional element according to claim 1 or 2, **characterised in**
- **that** the peg comprises an axial length approximately equal to half of the thickness of the straps, and the bore comprises an axial depth greater than the axial length of the peg.

4. The constructional element according to claim 3, **characterised in**
- **that** the axial depth of the bore includes the thickness in cross-section of the clip connector affected.

## Revendications

1. Panneau de construction de type planche de bois comportant des tronçons de type courroie (1, 2, 3, 4) en bois qui sont agencés en rangées côte à côte formant ensemble deux faces frontales opposées du panneau et sont connectés l'un avec l'autre sans des moyens de connexion additionnels comme des colles ou des autres adhésifs sur des faces frontales orientées de manière linéaire par des connecteurs (6, 7, 10) aussi orientés de manière linéaire d'une part, et par des rainures (5, 8, 9) comportant les connecteurs d'autre part, les connecteurs et les rainures comportant une section transversale égale de type queue d'aronde,
**caractérisé en ce**
- **que** les connecteurs sont entourés par les rainures sous une prétention constante et sous des influences uniformes concernant la température et l'humidité de l'environnement,
- **qu'**au moins dans un endroit chacun le long des faces frontales adjacentes des courroies, un pêne en bois est inséré dans une encoche d'arrêt qui est ouverte à une des faces frontales communes des courroies, et s'étend d'une courroie à l'autre courroie des courroies connectées,
- **que** l'encoche d'arrêt comprend une profondeur pénétrant de son ouverture dans une des faces frontales des courroies opposées dans le connecteur de la connexion des courroies adjacentes,
- **que** l'encoche d'arrêt commune aux courroies connectées l'une à l'autre a la forme d'un trou environ à symétrie de rotation avec une ouverture dans au moins une des faces frontales communes des courroies, et avec un alignement axial environ vertical à la face frontale commune, et
- **que** le pêne comporte une cheville en bois (11, 12, 13, 14) à symétrie axiale environ similaire au trou à symétrie de rotation, qui est enfoncé dans le trou à travers l'ouverture dans l'une des faces frontales communes des courroies.

2. Elément de construction selon la revendication 1, **caractérisé en ce**
- **que** l'encoche d'arrêt comporte un alésage en forme cylindrique environ et une profondeur axiale pénétrant dans le connecteur de la connexion des courroies adjacentes, de préférence pénétrant à travers ledit connecteur,
- et **que** dans l'alésage le pêne comporte une cheville approximativement cylindrique ou légèrement conique qui est formée de préférence avec des stries alignées à symétrie axiale à sa surface de l'enveloppe.

3. Elément de construction selon la revendication 1 ou 3, **caractérisé en ce**
- **que** la cheville comporte une longueur axiale environ égale à la moitié de l'épaisseur des courroies, et l'alésage comporte une profondeur axiale supérieure à la longueur axiale de la cheville.

4. Elément de construction selon la revendication 3, **caractérisé en ce**
- **que** la profondeur axiale de l'alésage comprend l'épaisseur en section transversale du connecteur en affecté.
